# DEMANDE DE BREVET EUROPEEN

(11) **EP 3 838 351 A1**
(43) Date de publication de la demande: **23.06.2021**
(21) Numéro de dépôt: 19306689.1
(22) Date de dépôt: 19.12.2019
(51) Int. Cl.: A62C 3/16, A62C 35/10, H01M 2/02

(54) **DISPOSITIF DE PROTECTION THERMIQUE, CONTAINER L'INCORPORANT ET PROCEDE POUR LUTTER CONTRE UN ECHAUFFEMENT OU DEPART DE FEU DANS LE CONTAINER**

(71) Demandeur: Jehier, 49120 Chemille (FR)
(72) Inventeur: OGRETEN, Dogan, 49190 Rochefort sur Loire (FR)
(74) Mandataire: Plasseraud IP

(57) **Abrégé**

L'invention concerne un dispositif de protection thermique contre un échauffement indésirable ou départ de feu dans une zone critique d'au moins un objet d'un container, un container qui renferme ce dispositif et un procédé pour lutter contre réchauffement ou départ de feu.

Le dispositif (6) est adapté pour équiper l'intérieur du container (1) en surmontant au moins un objet (3) qui y est logé, le dispositif étant délimité par une paroi externe adaptée pour renfermer un fluide ignifuge (7).

Selon l'invention, ladite paroi externe comporte :
- une enveloppe (8) périphérique thermorésistante pourvue d'une structure de cloisonnement interne (9) formant des réservoirs (10) pour le fluide, et
- au moins une membrane (11) thermosensible et non inflammable qui est moins rigide que l'enveloppe à laquelle elle est fixée en formant un fond (10a) pour les réservoirs, la membrane étant apte à être localement rompue à une température prédéterminée générée par la zone critique de sorte à libérer le fluide de l'un au moins des réservoirs sélectivement vers et au contact de la zone critique pour y limiter ou stopper réchauffement ou le départ de feu.

## Description

### Domaine technique

L'invention concerne un dispositif de protection thermique contre un échauffement indésirable ou un départ de feu dans une zone critique d'au moins un objet d'un container, un container de stockage ou de transport d'au moins un objet qui renferme au moins un tel dispositif, et un procédé pour lutter contre l'échauffement ou départ de feu d'au moins un objet logé dans un container. L'invention s'applique notamment au conditionnement d'appareils de stockage d'énergie électrique de préférence choisis parmi les batteries d'accumulateurs tels que des modules de batteries lithium-ion, bien que pouvant concerner d'autres appareils également susceptible d'être le siège d'un auto-échauffement ou d'un départ de feu.

### Technique antérieure

De manière connue, le stockage et le transport de marchandises telles que des batteries lithium-ion, en particulier par fret aérien mais également terrestre ou maritime, peut s'avérer problématique du fait que ces batteries sont classées comme matières dangereuses (« HAZMAT » pour « Hazardous Material » en anglais) en raison de leur capacité à s'auto-échauffer lorsqu'elles sont soumises à certaines contraintes environnementales ou présentent des défauts de fabrication souvent indétectables. Cet auto-échauffement est susceptible de produire un emballement thermique pouvant dépasser les 1000° C avec un départ de feu, et constitue donc une source de risque majeur vis-à-vis d'un incendie dans un bâtiment de stockage des batteries ou dans le véhicule les transportant, tel qu'un avion. Il en résulte que le transport en soute de batteries lithium-ion est à présent interdit dans les avions transportant des passagers.

Les solutions de protection actuelles privilégient usuellement la stratégie de confinement du feu généré par les batteries lithium-ion transportées, au moyen de couvertures anti-feu ou de containers spéciaux que l'on dispose autour des caisses de transport des batteries. Cependant, ces solutions de confinement présentent notamment les inconvénients suivants.

Même si le feu semble confiné, le foyer de flamme demeure actif et est susceptible de se propager si le moyen de confinement présente un défaut imprévu tenant à sa structure, à son installation ou à un autre facteur. Ainsi, un avion transportant ces batteries véhicule en soute un volume potentiellement considérable de matière en feu ou en cours de combustion.

De plus, en cas d'auto-échauffement d'une seule batterie au sein d'une caisse de stockage ou de transport d'une multitude de batteries, le phénomène d'emballement thermique risque de se répandre de proche en proche en affectant toutes les batteries et c'est donc toute la cargaison de la caisse qui sera détruite en dépit du confinement précité entourant cette caisse.

On a cherché récemment à bloquer le phénomène d'auto-échauffement au plus proche de la source, à savoir la batterie défaillante elle-même, comme dans le document EP 2 729 977 B1 qui présente un dispositif pour stocker au moins un objet comprenant au moins une extrémité supérieure et au moins une extrémité inférieure, le dispositif comprenant :
- un container configuré pour stocker ledit au moins un objet ; et
- une poche contenant un liquide, et configurée pour couvrir substantiellement ladite au moins une extrémité supérieure dudit au moins un objet lorsqu'il est stocké à l'intérieur du container, la poche étant configurée pour entrer en contact avec ladite au moins une extrémité supérieure dudit au moins un objet, et s'ouvrir lorsque le contenu est expulsé par ledit au moins un objet en raison d'un emballement thermique.

Un inconvénient majeur du dispositif selon ce document réside dans la structure souple de la poche utilisée et dans le contact mécanique requis entre la poche et l'un au moins des objets stockés pour rompre cette poche et libérer le liquide, ce qui peut notamment générer une ouverture accidentelle de la poche déversant de manière prématurée le liquide sur les objets stockés.

### Exposé de l'invention

Un but de la présente invention est donc de proposer un dispositif de protection thermique adapté pour équiper l'intérieur d'un container en surmontant au moins un objet logé dans le container, qui remédie notamment aux inconvénients précités, le dispositif étant apte à lutter contre un échauffement indésirable ou un départ de feu dans une zone critique dudit au moins un objet, le dispositif étant délimité par une paroi externe adaptée pour renfermer un fluide ignifuge.

A cet effet, un dispositif de protection selon l'invention est tel que ladite paroi externe comporte :
- une enveloppe périphérique thermorésistante pourvue d'une structure de cloisonnement interne formant une pluralité de réservoirs pour le fluide, et
- au moins une membrane thermosensible et non inflammable qui est moins rigide que ladite enveloppe à laquelle elle est fixée en formant un fond pour les réservoirs, ladite au moins une membrane étant apte à être localement rompue à une température prédéterminée générée par la zone critique de sorte à libérer le fluide de l'un au moins des réservoirs sélectivement vers et au contact de la zone critique pour y limiter ou stopper l'échauffement ou le départ de feu.

On notera que ladite au moins une membrane forme ainsi un moyen de libération sélective du fluide ignifuge en fonction de la localisation de la zone critique en contrebas et directement sur cette zone critique à l'origine de l'échauffement ou du feu, et que ce dispositif permet cette libération le plus rapidement possible avant que le niveau de température à l'intérieur du container devienne trop élevé.

On notera également que la thermosensibilité de la ou de chaque membrane ainsi fixée permet à celle-ci de s'ouvrir rapidement par simple fusion lorsqu'elle est exposée à ladite température prédéterminée, valeur seuil qui détermine le choix du matériau de la ou de chaque membrane et qui est prévue suffisamment éloignée de la température usuelle d'emballement thermique pour des batteries lithium-ion notamment, comme expliqué ci-après. Ainsi, en cas d'auto-échauffement d'une telle batterie surmontée par le dispositif de l'invention, le fluide libéré par la membrane localement rompue peut s'écouler par gravité à l'état liquide pour venir au contact de la ou des batterie(s) critique(s) et commencer à y dissiper la chaleur en bloquant le phénomène d'emballement. L'ensemble du milieu de stockage dans le container est ainsi préservé.

On notera en outre que ladite structure de cloisonnement interne de l'enveloppe permet avantageusement de contrôler le débit et la répartition volumique du fluide libéré vers la zone critique dudit au moins un objet, en ne libérant le fluide qu'aux emplacements rendus nécessaires par l'échauffement ou départ de feu localisé.

Avantageusement, l'enveloppe peut former une coque pour le dispositif, l'enveloppe et ladite structure de cloisonnement pouvant chacune être réalisées en un matériau rigide tel qu'un matériau plastique, métallique ou composite à matrice plastique.

On notera que l'enveloppe rigide thermorésistante de l'invention se différencie de la poche précitée de l'art antérieur, et que cette rigidité de l'enveloppe permet de protéger efficacement les réservoirs internes de fluide ignifuge en évitant toute rupture indésirable de la paroi externe du dispositif de protection thermique.

Selon une autre caractéristique de l'invention, le dispositif peut être adapté pour que ladite au moins une membrane, qui est fixée de manière étanche en un côté inférieur de l'enveloppe (i.e. de sorte à sceller ce côté inférieur), soit maintenue distante dudit au moins un objet.

Avantageusement, le dispositif peut dans ce cas comprendre des moyens d'espacement pour maintenir ladite au moins une membrane à distance dudit au moins un objet, lesdits moyens d'espacement étant adaptés pour être montés en appui sur ledit au moins un objet et pouvant comprendre :
- un rebord périphérique inférieur de ladite enveloppe, en retrait duquel s'étend ladite au moins une membrane, et de préférence en outre
- au moins une entretoise périphérique insérée vers l'intérieur dudit rebord périphérique inférieur et par exemple positionnée contre ledit rebord périphérique inférieur.

On notera que ce montage espacé de la face inférieure du dispositif de protection apte à libérer le fluide par rapport audit au moins un objet stocké permet d'éviter toute rupture accidentelle de la membrane par contact dudit au moins un objet, contrairement à la poche précitée de l'art antérieur.

Selon une autre caractéristique de l'invention, le dispositif peut comprendre des moyens de rigidification de l'enveloppe qui sont formés au moins en partie par ladite structure de cloisonnement interne, laquelle peut être solidaire d'une face interne de ladite enveloppe et peut comporter des cloisons adjacentes pour lesdits réservoirs qui s'étendent verticalement entre ladite au moins une membrane et un rebord périphérique supérieur de ladite enveloppe.

Avantageusement, lesdits réservoirs peuvent être dans ce cas juxtaposés par lesdites cloisons en admettant chacun un axe vertical de symétrie perpendiculaire à ladite au moins une membrane, lesdits réservoirs étant de préférence de section polygonale, par exemple prismatiques à cloisons en forme de nid d'abeilles.

On notera que cette structure de cloisonnement interne par exemple de type en nid d'abeilles permet de conférer une intégrité structurale satisfaisante à l'enveloppe de protection, en plus d'assurer le contrôle précité du débit et de la répartition volumique du fluide en cas de rupture de la membrane. Cette structure de cloisonnement sert ainsi à la fois de réservoirs modulaires et d'élément structurant pour le dispositif.

Selon une autre caractéristique de l'invention, le dispositif peut présenter une forme de cassette avec ladite enveloppe qui peut présenter un contour sensiblement parallélépipédique et une section rectangulaire ou carrée dans un plan horizontal parallèle à ladite au moins une membrane.

On notera que cette forme de cassette se traduit ainsi par une épaisseur du dispositif (i.e. sa hauteur à l'intérieur du container) réduite en comparaison de sa largeur et de sa longueur, rendant possible l'insertion du dispositif au-dessus des objets stockés entre ces derniers et le couvercle du container.

De préférence, ledit fluide est un hydrogel ou de l'eau, et l'hydrogel peut être avantageusement dépourvu de tout polymère super-absorbant et de tout sel métallique, contrairement à nombre de fluides ignifuges connus.

On notera que l'eau est utilisable à titre encore plus préférentiel, vu qu'elle peut être stockée à l'intérieur de l'enveloppe sans précautions particulières pour la manipulation ou le transport des dispositifs et containers les incorporant.

Selon une autre caractéristique de l'invention, ladite au moins une membrane, par exemple translucide ou transparente, peut être formée d'au moins une couche constituée d'une composition polymérique présentant un point de fusion compris entre 70 et 150° C environ (de préférence entre 71 et 120° C), ladite au moins une membrane étant de préférence constituée d'une unique couche constituée de ladite composition.

On notera que la ou chaque membrane selon l'invention doit être solide et résistante aux températures normales d'utilisation, i.e. typiquement jusqu'à 60° C environ (notamment afin d'éviter qu'elle ne s'ouvre accidentellement en raison d'une exposition prolongée au soleil), et qu'elle est apte à fondre (i.e. à se liquéfier) le plus rapidement possible lorsqu'elle est soumise une température critique minimale pouvant varier de 70 à 150° C environ.

On notera également que l'aspect translucide ou transparent de ladite au moins une membrane permet de visualiser la structure de cloisonnement interne et ses cloisons (e.g. en nid d'abeilles) contenant le fluide, par la face inférieure du dispositif.

De préférence, lorsque ledit fluide est de l'eau, ladite composition polymérique présente un point de fusion compris entre 72 et 100° C, de préférence entre 75 et 85° C.

On notera que ce point de fusion maximal de 100° C pour ladite ou chaque membrane permet d'éviter une évaporation de l'eau générée par un échauffement atteignant cette température, afin de s'assurer que l'eau libérée permette de refroidir suffisamment la zone critique échauffée du ou des objets stockés par son écoulement à l'état liquide sur cette zone.

On notera également que la plage de température préférentielle précitée entre 75 et 85°C correspond avantageusement aux températures auxquelles un emballement thermique de batteries, telles que des batteries lithium-ion, commence usuellement à se produire.

Selon un mode de réalisation de l'invention, ladite composition polymérique comprend au moins un composé non inflammable de type oligomère ou paraffinique présentant de 10 à 50 atomes de carbone, qui est de préférence constitué d'au moins une paraffine par exemple chlorée présentant de 12 à 30 atomes de carbone (encore plus préférentiellement une paraffine chlorée à plus de 40 % en masse présentant de 14 à 20 atomes de carbone, la paraffine chlorée pouvant contenir par exemple entre 50 % et 75 % de chlore en masse).

On notera que ce ou ces composés ignifuges oligomères ou paraffiniques sont à chaînes courtes, présentent des points de fusion assez bas et permettent avantageusement de conférer à ladite ou chaque membrane à la fois des propriétés mécaniques satisfaisantes en l'absence d'auto-échauffement ou de départ de feu (i.e. à température ambiante) et des propriétés ignifuges puisque ce ou ces composés ne favorisent pas la propagation d'une flamme éventuelle après fusion de la membrane.

De préférence selon ce mode de réalisation de l'invention, la composition polymérique comprend en outre :
- au moins une première résine polymérique à point de fusion compris entre 30 et 70°C, de préférence entre 40 et 50° C, et/ou
- au moins une seconde résine tackifiante à point de ramollissement compris entre -20 et 150°C, de préférence une résine polyuréthane à point de ramollissement compris entre 20 et 80°C.

On notera que ladite au moins une première résine polymérique peut permettre de conférer un comportement souple au film de membrane à basse température afin de ne pas provoquer de fissures notamment à -50° C, tout en n'empêchant pas la composition polymérique de fluer lorsque la température à laquelle est soumise la membrane dans le container atteint la température critique minimale précitée d'au moins 70° C. Cette première résine polymérique (ou mélange de résines polymériques) peut être présente dans la composition suivant une fraction massique variable, par exemple de 1 à 50 %, selon ses propriétés rhéologiques, sa température de fusion et sa compatibilité chimique avec les autres ingrédients de la composition.

On notera que ladite au moins une seconde résine tackifiante peut permettre d'obtenir un matériau rigide à température ambiante et liquide lorsque la température à laquelle est soumise la membrane dans le container atteint la température critique minimale précitée d'au moins 70° C. Cette seconde résine tackifiante (ou mélange de résines tackifiantes) peut être présente dans la composition suivant une fraction massique variable, par exemple de 1 à 50 %.

Selon un exemple préférentiel de l'invention, la composition comprend :
- selon une fraction massique supérieure à 50 % et de préférence supérieure ou égale à 80 % (voire supérieure à 90 %), ledit au moins un composé non inflammable de type oligomère ou paraffinique, et
- selon une fraction massique inférieure à 50 % et de préférence inférieure ou égale à 20 % (voire inférieure à 10 %), ladite au moins une résine tackifiante.

On notera que l'utilisation préférentielle d'une ou plusieurs paraffine(s) comme constituant(s) majoritairement présent(s) dans la composition de membrane selon l'invention permet de choisir avec précision la température à laquelle on souhaite que la ou chaque membrane se rompre, ce qui présente l'avantage de pouvoir adapter la membrane à la réalité de la protection des objets stockés, tels que les batteries précitées.

Un container de stockage ou de transport selon l'invention d'au moins un objet susceptible d'être le siège d'un auto-échauffement ou départ de feu, est tel que le container renferme au moins un dispositif de protection thermique tel que défini ci-dessus qui est disposé au-dessus dudit au moins un objet, ladite au moins une membrane du dispositif étant de préférence maintenue à distance dudit au moins un objet dans le container, par exemple à 2 à 3 cm de distance d'une surface supérieure dudit au moins un objet.

Selon une autre caractéristique de l'invention, le container peut comprendre des moyens d'espacement pour maintenir ladite au moins une membrane à distance d'une surface supérieure sensiblement horizontale dudit au moins un objet, lesdits moyens d'espacement étant montés en appui sur ladite surface supérieure et pouvant comprendre :
- un rebord périphérique inférieur de ladite enveloppe, en retrait duquel s'étend ladite au moins une membrane, et de préférence en outre
- au moins une entretoise périphérique insérée vers l'intérieur dudit rebord périphérique inférieur et par exemple positionnée contre ledit rebord périphérique inférieur.

Selon une autre caractéristique de l'invention, le container peut être en forme de caisse et comporter un panneau de fond recevant ledit au moins un objet, des panneaux latéraux et un panneau de couvercle, ledit au moins un dispositif de protection pouvant former une cassette positionnée entre ledit au moins un objet et le panneau de couvercle, lequel peut être monté sur ou à proximité immédiate d'un rebord supérieur de ladite enveloppe.

Avantageusement, ledit au moins un objet peut comprendre une pluralité d'appareils de stockage d'énergie électrique de préférence choisis parmi les batteries d'accumulateurs tels que des modules de batteries lithium-ion.

On notera qu'il est possible de prévoir plusieurs dispositifs de protection selon l'invention juxtaposés et/ou superposés de manière espacée à l'intérieur d'un même container, pourvu que la ou chaque membrane de chaque dispositif de protection soit agencée au-dessus d'un ensemble d'objets (e.g. modules d'appareils, tels que des batteries).

Un procédé selon l'invention pour lutter au moyen d'un fluide ignifuge contre un échauffement indésirable ou un départ de feu dans une zone critique d'au moins un objet logé dans un container, tel qu'une pluralité d'appareils de stockage d'énergie électrique de préférence choisis parmi les batteries d'accumulateurs comme par exemple des modules de batteries lithium-ion, comprend les étapes suivantes :
- détermination d'une température critique minimale définie pour l'échauffement ou départ de feu dudit au moins un objet, comprise entre 70 et 150° C et de préférence entre 72 et 100° C, notamment dans le cas où ledit fluide est de l'eau,
- sélection d'une composition polymérique thermosensible et non inflammable apte à demeurer à l'état solide et sans se rompre à une température inférieure à ladite température critique minimale, et apte à fondre à ladite température critique minimale sans que ladite composition soit en contact avec ledit au moins un objet,
- fabrication d'au moins une membrane comprenant et de préférence constituée de ladite composition,
- fabrication d'un dispositif de protection thermique par fixation étanche de ladite au moins une membrane sous une enveloppe thermorésistante contenant une pluralité de réservoirs, de telle sorte que ladite au moins une membrane forme un fond pour les réservoirs,
- mise en place du dispositif avec les réservoirs remplis dudit fluide à l'intérieur du container, au-dessus dudit au moins un objet, puis
- libération et écoulement dudit fluide à l'état liquide de l'un au moins desdits réservoirs sélectivement vers et au contact de ladite zone critique, par fusion locale de ladite au moins une membrane générée par ledit échauffement ou départ de feu, pour que ledit fluide écoulé limite ou stoppe ce dernier.

On notera que l'on détermine dans un premier temps ladite température critique minimale de sorte qu'elle soit suffisamment éloignée de la température usuelle d'emballement thermique de 400° C environ pour des batteries lithium-ion notamment, puis que l'on sélectionne en conséquence la composition de membrane pour qu'elle ne fonde pas dans les conditions normales d'utilisation (i.e. conditions ambiantes incluant une exposition au soleil du container à une température maximale de 60 ou 65° C environ), et qu'elle se rompe localement par fusion à ladite température critique minimale bien que demeurant à une distance de quelques cm du ou des objets à protéger (e.g. à 2 à 3 cm environ des batteries lithium-ion stockées dans le container).

### Brève description des dessins

D'autres caractéristiques, avantages et détails de la présente invention ressortiront à la lecture de la description suivante d'un exemple de réalisation de l'invention, donné à titre illustratif et non limitatif en relation avec les dessins joints, parmi lesquels :
**Fig. 1**

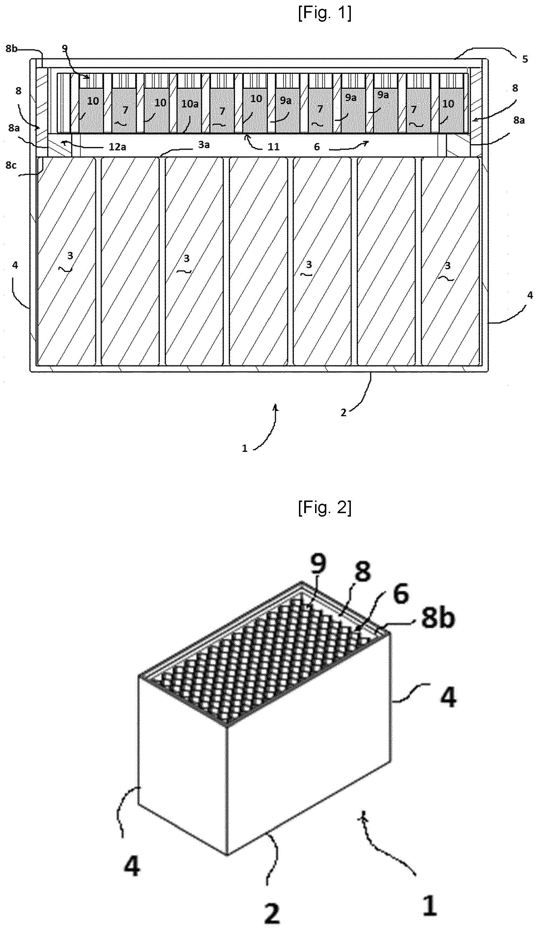

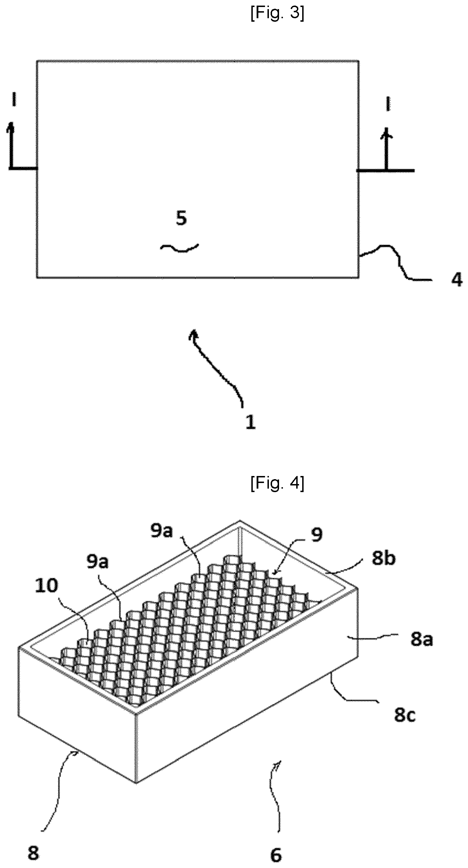

   [Fig. 1] est une vue schématique en coupe dans le plan vertical I-I de la figure 3 d'un container selon un exemple de l'invention, constitué d'une caisse contenant des appareils de stockage d'énergie électrique et un dispositif de protection thermique selon l'invention surmonté d'un couvercle de la caisse.
**Fig. 2**
   [Fig. 2] est une vue schématique de dessus et en perspective du container de la figure 1 dépourvu de son couvercle.
**Fig. 3**
   [Fig. 3] est une vue de dessus du container de la figure 1, montrant son couvercle.
**Fig. 4**
   [Fig. 4] est une vue schématique de dessus et en perspective du dispositif de protection thermique selon l'invention tel que visible à la figure 1.
**Fig. 5**

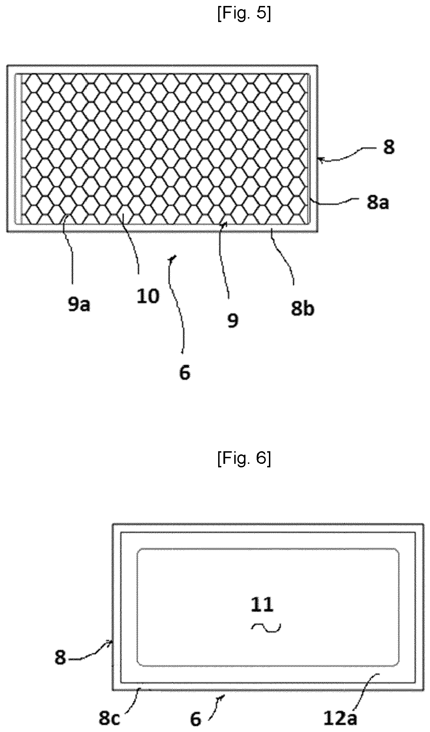

   [Fig. 5] est vue de dessus du dispositif de protection de la figure 4.
**Fig. 6**
   [Fig. 6] est une vue de dessous du dispositif de protection de la figure 4.

Le container 1 selon l'exemple de l'invention illustré à la figure 1 est constitué d'une caisse comprenant un panneau de fond 2 recevant des batteries lithium-ion 3 à titre exemplatif d'objets à stocker et/ou à transporter, des panneaux latéraux 4 et un panneau de couvercle 5, et le container 1 incorpore un dispositif de protection 6 en forme de cassette parallélépipédique positionné entre une surface supérieure horizontale 3a des batteries 3 et le panneau de couvercle 5 qui, dans cet exemple, est monté sur les panneaux latéraux 4 immédiatement au-dessus du dispositif 6. On voit aux figures 1 et 2 que le dispositif 6 présente une section horizontale rectangulaire correspondant à la section horizontale interne des panneaux latéraux 4 du container 1, i.e. apte à venir s'insérer en étant calé latéralement contre ces panneaux latéraux 4. Comme indiqué ci-dessus, le container 1 pourrait contenir en variante un ou plusieurs autres appareils de stockage d'énergie électrique, ou de manière générale tout objet susceptible d'être le siège d'un emballement thermique ou départ de feu.

Comme illustré aux figures 1-2, le dispositif 6 est délimité par une paroi externe qui est adaptée pour renfermer un fluide ignifuge 7 tel qu'un hydrogel ou de l'eau, et qui comporte :
- une enveloppe 8 périphérique thermorésistante formant une coque pour le dispositif 6, et pourvue d'une structure de cloisonnement interne 9 formant une pluralité de réservoirs 10 pour le fluide 7, et
- une membrane 11 thermosensible et non inflammable moins rigide que l'enveloppe 8 sous laquelle elle est fixée de manière étanche en formant un fond 10a commun à tous les réservoirs 10.

Comme plus particulièrement visible aux figures 4 et 5, l'enveloppe 8 est délimitée extérieurement par une paroi latérale 8a de section rectangulaire, et la structure de cloisonnement interne 9 est solidaire d'une face périphérique interne de cette paroi latérale 8a, sur tout le périmètre de cette face périphérique interne. La structure de cloisonnement 9 comporte une multitude de cloisons 9a adjacentes pour les réservoirs 10 qui s'étendent verticalement entre la membrane 11 et un rebord périphérique supérieur 8b de l'enveloppe 8.

Les réservoirs 10, de section horizontale polygonale dans cet exemple de réalisation, sont juxtaposés par les cloisons 9a en admettant des axes verticaux de symétrie parallèles entre eux et perpendiculaire à la membrane 11, et l'on voit à la figure 5 que les réservoirs 10 sont identiques et par exemple prismatiques du fait que les cloisons 9a les délimitant sont de section par exemple hexagonale (géométrie en forme de nid d'abeilles). Avantageusement, la structure de cloisonnement 9 de l'enveloppe 8 permet en outre de rigidifier cette dernière en lui conférant une résistance mécanique améliorée, en comparaison de celle de la seule paroi latérale de l'enveloppe 8.

La membrane 11 est fixée par exemple par thermo-scellage sous et au contact de la structure de cloisonnement 9, en venant sceller l'espace compris entre la paroi latérale 8a de l'enveloppe 8 et les bases respectives des cloisons 9a, et ainsi fermer tout le côté inférieur de l'enveloppe 8. On voit à la figure 1 que la membrane 11 s'étend continûment au contact de la face périphérique interne de la paroi latérale 8a de l'enveloppe, en retrait (i.e. en contrehaut) d'un rebord périphérique inférieur 8c de l'enveloppe 8, de sorte que ce rebord inférieur 8c (voir figures 1 et 6) fait saillie vers le bas par rapport à la membrane 11.

Comme illustré aux figures 1 et 6, le dispositif 6 comprend des moyens d'espacement 12 pour maintenir la membrane 11 à distance des batteries 3 qui comprennent dans cet exemple de réalisation, en plus du rebord périphérique inférieur 8c de l'enveloppe 8, une entretoise périphérique 12a (continue ou discontinue) insérée vers l'intérieur du rebord inférieur 8c et par exemple contre ce dernier, de manière que l'entretoise 12a affleure au niveau du rebord inférieur 8c et soit adaptée pour être montée sur une zone périphérique horizontale de la surface supérieure 3a des batteries 3 (zone adjacente à la face interne des panneaux latéraux 4), tout comme l'enveloppe 8 via son rebord inférieur 8c. On comprend que de cette manière la membrane demeure distante de cette surface supérieure 3a (par exemple de 2 à 3 cm), lorsque le dispositif 6 est monté à l'intérieur du container 1 en surmontant les batteries 3.

On voit dans l'exemple de la figure 1 que la face supérieure ouverte du dispositif 6, permettant le remplissage des réservoirs 10 en fluide, est fermée par le panneau de couvercle 5 du container 1 qui vient recouvrir directement le rebord périphérique supérieur 8b de l'enveloppe 8. On notera cependant qu'un container selon l'invention pourrait être équipé d'un ou plusieurs dispositifs de protection 1 tels que celui des figures 4-6 avec un agencement différent par rapport au panneau de couvercle 5.

L'enveloppe 8 et la structure de cloisonnement 9 sont chacune réalisées en un matériau rigide de préférence de type plastique, métallique ou composite à matrice plastique, à la différence de la membrane, par exemple translucide ou transparente, qui est avantageusement formée d'au moins une couche constituée d'une composition polymérique thermosensible et non inflammable à bas point de fusion. La composition polymérique de la membrane 1 est spécifiquement conçue pour :
- demeurer à l'état solide et sans se rompre à une température inférieure à 70° C environ correspondant aux conditions normales de stockage/ transport du container 1, et pour
- fondre dès que la membrane 11 atteint une température critique minimale comprise entre 70 et 150° C (de préférence entre 72 et 100° C notamment lorsque le fluide 7 est de l'eau), sans que la membrane 11 soit en contact avec les batteries 3.

La membrane 11 est ainsi apte à être localement rompue par fusion à cette température critique minimale générée par une ou plusieurs zone(s) critique(s) des batteries 3 en cours d'échauffement ou de départ de feu, de sorte à libérer le fluide de l'un au moins des réservoirs 10 sélectivement vers et au contact de la zone critique pour y limiter ou stopper l'échauffement ou le départ de feu.

### Exemple de réalisation d'une membrane selon l'invention

On a préparé dans les conditions suivantes une composition polymérique pour la membrane 11, qui était constituée d'une unique couche transparente constituée de cette composition. On a mélangé à cet effet à 120° C, dans un récipient métallique chauffé par un bain-marie, deux paraffines chlorées avec une résine tackifiante de type polyuréthane jusqu'à l'obtention d'un liquide homogène dépourvu de grains, comme spécifié au tableau 1 ci-après.

**[Tableau 1]**

| **Dénominations commerciales** | **Fabricants** | **Type ou fonction des ingrédients** | **Quantité (g)** |
|---|---|---|---|
| Desmocoll 540 | Covestro | Résine tackifiante | 5 |
| Cloparin 50 | Caffaro | Paraffine chlorée | 39 |
| Cloparin 61 | Caffaro | Paraffine chlorée | 56 |

On a vérifié que les cires de paraffine de cette composition, utilisées dans la composition en combinaison avec la résine tackifiante, permettent d'obtenir une composition transparente qui est solide à température ambiante (même à 50 ou 60° C) et qui commence à fondre en devant liquide à une température comprise entre 75 et 85° C, ce qui est particulièrement avantageux pour limiter ou bloquer l'emballement thermique de batteries lithium-ion.

Comme expliqué ci-dessus, on notera qu'une composition de membrane selon l'invention n'est nullement limitée à la formulation testée ci-dessus, mais peut englober d'une manière générale au moins un composé oligomère ou paraffinique de 10 à 50 atomes de carbone, au moins une résine polymérique à point de fusion entre 30 et 70°C et/ou au moins une résine tackifiante à point de ramollissement entre -20 et 150°C.

## Revendications

1. Dispositif de protection thermique (6) adapté pour équiper l'intérieur d'un container (1) en surmontant au moins un objet (3) logé dans le container, le dispositif étant apte à lutter contre un échauffement indésirable ou un départ de feu dans une zone critique dudit au moins un objet, le dispositif étant délimité par une paroi externe adaptée pour renfermer un fluide ignifuge (7), dans lequel ladite paroi externe comporte :
- une enveloppe (8) périphérique thermorésistante pourvue d'une structure de cloisonnement interne (9) formant une pluralité de réservoirs (10) pour le fluide, et
- au moins une membrane (11) thermosensible et non inflammable qui est moins rigide que ladite enveloppe à laquelle elle est fixée en formant un fond (10a) pour les réservoirs, ladite au moins une membrane étant apte à être localement rompue à une température prédéterminée générée par la zone critique de sorte à libérer le fluide de l'un au moins des réservoirs sélectivement vers et au contact de la zone critique pour y limiter ou stopper l'échauffement ou le départ de feu.

2. Dispositif (6) selon la revendication 1, dans lequel ladite enveloppe (8) forme une coque pour le dispositif, ladite enveloppe et ladite structure de cloisonnement (9) étant chacune réalisées en un matériau rigide tel qu'un matériau plastique, métallique ou composite à matrice plastique.

3. Dispositif (6) selon la revendication 1 ou 2, dans lequel le dispositif est adapté pour que ladite au moins une membrane (11), qui est fixée de manière étanche en un côté inférieur de ladite enveloppe (8), soit maintenue distante dudit au moins un objet (3).

4. Dispositif (6) selon la revendication 3, dans lequel le dispositif comprend des moyens d'espacement (12) pour maintenir ladite au moins une membrane (11) à distance dudit au moins un objet (3), lesdits moyens d'espacement étant adaptés pour être montés en appui sur ledit au moins un objet et comprenant :
- un rebord périphérique inférieur (8c) de ladite enveloppe (8), en retrait duquel s'étend ladite au moins une membrane (11), et de préférence en outre
- au moins une entretoise périphérique (12a) insérée vers l'intérieur dudit rebord périphérique inférieur et par exemple positionnée contre ledit rebord périphérique inférieur.

5. Dispositif (6) selon une des revendications précédentes, dans lequel le dispositif comprend des moyens de rigidification de l'enveloppe (8) qui sont formés au moins en partie par ladite structure de cloisonnement interne (9), laquelle est solidaire d'une face interne de ladite enveloppe et comporte des cloisons (9a) adjacentes pour lesdits réservoirs (10) qui s'étendent verticalement entre ladite au moins une membrane (11) et un rebord périphérique supérieur (8b) de ladite enveloppe, et
de préférence dans lequel lesdits réservoirs (10) sont juxtaposés par lesdites cloisons (9a) en admettant chacun un axe vertical de symétrie perpendiculaire à ladite au moins une membrane (11), lesdits réservoirs étant de préférence de section polygonale, par exemple prismatiques à cloisons en forme de nid d'abeilles.

6. Dispositif (6) selon une des revendications précédentes, dans lequel le dispositif présente une forme de cassette avec ladite enveloppe (8) qui présente un contour sensiblement parallélépipédique et une section rectangulaire ou carrée dans un plan parallèle à ladite au moins une membrane (11).

7. Dispositif (6) selon une des revendications précédentes, dans lequel ledit fluide (7) est un hydrogel ou de l'eau et est dépourvu de tout polymère super-absorbant et de tout sel métallique.

8. Dispositif (6) selon une des revendications précédentes, dans lequel ladite au moins une membrane (11), par exemple translucide ou transparente, est formée d'au moins une couche constituée d'une composition polymérique présentant un point de fusion compris entre 70 et 150° C, ladite au moins une membrane étant de préférence constituée d'une unique couche constituée de ladite composition.

9. Dispositif (6) selon les revendications 7 et 8, dans lequel ledit fluide (7) est de l'eau et ladite composition polymérique présente un point de fusion compris entre 72 et 100° C, de préférence entre 75 et 85° C.

10. Dispositif (6) selon la revendication 8 ou 9, dans lequel la composition polymérique comprend au moins un composé non inflammable de type oligomère ou paraffinique présentant de 10 à 50 atomes de carbone, qui est de préférence constitué d'au moins une paraffine par exemple chlorée présentant de 12 à 30 atomes de carbone, et
de préférence dans lequel la composition polymérique comprend en outre :
- au moins une résine polymérique à point de fusion compris entre 30 et 70°C, de préférence entre 40 et 50° C, et/ou
- au moins une résine tackifiante à point de ramollissement compris entre -20 et 150°C, de préférence une résine polyuréthane à point de ramollissement compris entre 20 et 80°C.

11. Dispositif (6) selon la revendication 10, dans lequel la composition comprend :
- selon une fraction massique supérieure à 50 % et de préférence supérieure ou égale à 80 %, ledit au moins un composé non inflammable de type oligomère ou paraffinique, et
- selon une fraction massique inférieure à 50 % et de préférence inférieure ou égale à 20 %, ladite au moins une résine tackifiante.

12. Container (1) de stockage ou de transport d'au moins un objet (3) susceptible d'être le siège d'un auto-échauffement ou départ de feu, dans lequel le container renferme au moins un dispositif de protection thermique (6) selon une des revendications 1 à 11 disposé au-dessus dudit au moins un objet, ladite au moins une membrane (11) du dispositif étant de préférence maintenue à distance dudit au moins un objet dans le container, par exemple à 2 à 3 cm de distance d'une surface supérieure (3a) dudit au moins un objet, et
de préférence dans lequel le container comprend des moyens d'espacement (12) pour maintenir ladite au moins une membrane (11) à distance d'une surface supérieure (3a) sensiblement horizontale dudit au moins un objet (3), lesdits moyens d'espacement étant montés en appui sur ladite surface supérieure et comprenant :
- un rebord périphérique inférieur (8c) de ladite enveloppe (8), en retrait duquel s'étend ladite au moins une membrane, et de préférence en outre
- au moins une entretoise périphérique (12a) insérée vers l'intérieur dudit rebord périphérique inférieur et par exemple positionnée contre ledit rebord périphérique inférieur.

13. Container (1) selon la revendication 12, dans lequel le container est en forme de caisse et comporte un panneau de fond (2) recevant ledit au moins un objet (3), des panneaux latéraux (4) et un panneau de couvercle (5), ledit au moins un dispositif de protection (6) formant une cassette positionnée entre ledit au moins un objet et le panneau de couvercle, lequel est monté sur ou à proximité immédiate d'un rebord supérieur (8b) de ladite enveloppe (8).

14. Container (1) selon la revendication 12 ou 13, dans lequel ledit au moins un objet (3) comprend une pluralité d'appareils de stockage d'énergie électrique de préférence choisis parmi les batteries d'accumulateurs tels que des modules de batteries lithium-ion.

15. Procédé pour lutter au moyen d'un fluide ignifuge (7) contre un échauffement indésirable ou un départ de feu dans une zone critique d'au moins un objet (3) logé dans un container (1), tel qu'une pluralité d'appareils de stockage d'énergie électrique de préférence choisis parmi les batteries d'accumulateurs comme par exemple des modules de batteries lithium-ion, dans lequel le procédé comprend les étapes suivantes :
- détermination d'une température critique minimale définie pour l'échauffement ou départ de feu dudit au moins un objet, comprise entre 70 et 150° C et de préférence entre 72 et 100° C, notamment dans le cas où ledit fluide est de l'eau,
- sélection d'une composition polymérique thermosensible et non inflammable apte à demeurer à l'état solide et sans se rompre à une température inférieure à ladite température critique minimale, et apte à fondre à ladite température critique minimale sans que ladite composition soit en contact avec ledit au moins un objet,
- fabrication d'au moins une membrane (11) comprenant et de préférence constituée de ladite composition,
- fabrication d'un dispositif de protection thermique (6) par fixation étanche de ladite au moins une membrane sous une enveloppe (8) thermorésistante contenant une pluralité de réservoirs (10), de telle sorte que ladite au moins une membrane forme un fond (10a) pour les réservoirs,
- mise en place du dispositif avec les réservoirs remplis dudit fluide à l'intérieur du container, au-dessus dudit au moins un objet, puis
- libération et écoulement dudit fluide à l'état liquide de l'un au moins desdits réservoirs sélectivement vers et au contact de ladite zone critique, par fusion locale de ladite au moins une membrane générée par ledit échauffement ou départ de feu, pour que ledit fluide écoulé limite ou stoppe ce dernier.
